Europäisches Patentamt

European Patent Office

Office européen des brevets

(11) Veröffentlichungsnummer : **0 317 581 B1**

(12) # EUROPÄISCHE PATENTSCHRIFT

(45) Veröffentlichungstag der Patentschrift :
**27.05.92 Patentblatt 92/22**

(51) Int. Cl.$^5$ : **B23C 5/24,** B23B 27/16

(21) Anmeldenummer : **88903819.6**

(22) Anmeldetag : **28.04.88**

(86) Internationale Anmeldenummer :
**PCT/EP88/00358**

(87) Internationale Veröffentlichungsnummer :
**WO 88/08767 17.11.88 Gazette 88/25**

(54) **SCHNELLROTIERENDER FRÄS- ODER BOHRKOPF.**

(30) Priorität : **08.05.87 DE 3715338**

(43) Veröffentlichungstag der Anmeldung :
**31.05.89 Patentblatt 89/22**

(45) Bekanntmachung des Hinweises auf die
Patenterteilung :
**27.05.92 Patentblatt 92/22**

(84) Benannte Vertragsstaaten :
**AT BE CH DE FR GB IT LI LU NL SE**

(56) Entgegenhaltungen :
**EP-A- 0 074 601**
**EP-A- 0 075 177**
**EP-A- 0 121 582**
**FR-A- 2 052 070**
**US-A- 1 411 799**

(73) Patentinhaber : **Stora Feldmühle**
**Aktiengesellschaft**
**Feldmühleplatz 1**
**W-4000 Düsseldorf 11 (DE)**

(72) Erfinder : **DUNKLAU, Claus**
**Beratungsingenieur Schwarzwaldstrasse 3**
**W-7300 Esslingen-Neckar 1 (DE)**

**Beschreibung**

Die Erfindung betrifft einen mit Schneidplatten (11) bestückten Fräs- oder Bohrkopf, gemäß den Oberbegriffen der Patentansprüche 1 und 2.

Fräs- oder Bohrköpfe werden in zunehmendem Maße mit Keramikwendeschneidplatten bestückt, um die hohen Schnittgeschwindigkeiten, die diese Schneidplatten ermöglichen, voll ausschöpfen zu können. Die hohen Schnittgeschwindigkeiten führen in Verbindung mit einer spezifischen Schneidenkonstruktion zu Oberflächen, die geschliffenen Oberflächen kaum nachstehen, so daß durch das Bearbeiten mit keramischen Schneidplatten, in begrenztem Rahmen auch mit Hartmetallschneidplatten, ein Arbeitsgang eingespart werden kann.

Aufgrund der hohen Drehzahlen und der sich daraus ergebenden hohen Umfangsgeschwindigkeiten werden an die Spannelemente hohe Anforderungen gestellt, da durch die auftretenden Fliehkräfte ein sicherer Sitz der Schneidplatte im Spannelement nicht mehr gewährleistet ist. Bei Scheibenfräsern hat man daher, wie aus dem DE-GM 85 03 545 bekannt, Lochschneidplatten der üblichen Bauart benutzt, die im Flächenzentrum ihrer Nebenfreifläche ein Durchgangsloch aufweisen, das mit einer Aussenkung versehen ist, in die Spannelemente eingreifen und einen Druck gegen die Anlageflächen des Plattensitzes am Scheibenkörper hervorbringen. Sieht man davon ab, daß die erforderliche Stabilität insbesondere bei hohen Drehzahlen und beim Anfahren an das Werkstück nicht gegeben ist, so neigen diese Lochschneidplatten in erhöhtem Maße zu einer Rißbildung. Mit dem DE-GM 85 27 924 wird daher vorgeschlagen, einseitig eine Spannmulde in eine Schneidplatte einzubringen, wobei die Spannmulde in ihrem Längsschnitt Trapezform, in ihrem querschnitt Dreieckform, aufweist oder als kegelstumpfförmige Aussenkung angeordnet ist. Auch diese Spannmulde ist in der Nebenfläche angeordnet, die die dafür erforderliche Größe aufweist. Die Tiefe der Spannmulde entspricht dabei im wesentlichen der halben Dicke der Schneidplatte.

Scheibenfräser weisen im Gegensatz zu Planfräsern ein völlig anderes Anforderungsprofil auf, weil am Scheibenfräser die Kräfte völlig anders angreifen und auch ungleichmäßig sind. Bei jeder Umdrehung des Scheibenfräsers "schlägt" ein Zahn des Scheibenfräsers auf das zu bearbeitende Werkstück und hebt einen Span ab, der nachfolgende Zahn vollzieht im Anschluß daran den gleichen Vorgang. Es handelt sich also dabei um ein ständiges Schlagen, das zu einem Rattern führt, wodurch die Schneidplatte verstellt werden kann. Bei Scheibenfräsern ist es deshalb absolut erforderlich, die Schneidplatte, die radial zur Umdrehungsrichtung in Schlitzen der Scheibe angeordnet ist, gegen die Seitenwandung des Schlitzes zu pressen, was im allgemeinen durch Spannkeile erfolgt.

Walzenfräser sind in die gleiche Kategorie wie Scheibenfräser einzureihen, da sie sich, wie die DE-A 25 49 757 zeigt, aus nebeneinander auf einer Welle angeordneten Scheibenfräsern zusammensetzen.

Die darin angeordneten Scheibenausnehmungen dienen zur Aufnahme je einer Wendeschneidplatte und eines Klemmkörpers. Die Wendeschneidplatte kann dabei als Lochschneidplatte ausgeführt sein und wird in diesem Falle durch eine Madenschraube, die in das zentrische Loch der Klemmplatte eingreift, gesichert, es können aber auch Ausnehmungen in den Deckflächen der Wendeschneidplatte eingebracht sein, in die Vorsprünge des Klemmkeiles bzw. der Scheibenausnehmung eingreifen. Die Ausnehmung in den Deckflächen der Wendeschneidplatte weisen dabei die Form eines Kreisabschnittes auf, dessen Sekante parallel zur Rotationsachse des Fräsers verläuft. Die kreisabschnittförmige Ausnehmung verläuft dabei unter einem Winkel von gleich/kleiner 15 Grad zur Deckfläche. Durch diese Ausgestaltung wird ein sehr hoher Andruck durch die Keilklemme an die Seitenwandung erreicht. Anlagefehler der Schniedplatte lassen sich aber durch Anziehen des Keilelementes nicht korrigieren, es ist nicht sichergestellt, daß die Platte in den Plattensitz bis zum Boden eingezogen wird, da die Hauptkraftkomponente gegen die Seitenwand der Ausnehmung gerichtet ist.

Die Schnittkräfte wirken bei dieser Konstruktion der Fliehkraft entgegen. Der Angriff des Klemmkeiles erfolgt deshalb im Bereich der Mulde, die der Schneidkante benachbart ist. Ein Justieren einer solchen Schneidplatte ist nicht möglich, da sie über keinen separaten Halter verfügt, der im Fräskopf justiert werden kann.

Bei Fräsköpfen, die zum Planen und Bohrköpfen, die zum Aussipindeln konstruiert sind, liegen gegenüber den Scheibenfräsern völlig andere Anforderungen vor, d. h., daß die Schneidplatten Nebenfreiflächen aufweisen, deren Abmessungen für ein Spannen nicht ausreichen und in die ohne die Gefahr der Beschädigung von Schneidkanten keine Mulden zur Aufnahme von Spannelementen eingebracht werden können.

Der vorliegenden Erfindung liegt deshalb ausgehend vom Stand der Technik gemäß DE-A 2549757 die Aufgabe zugrunde, bei schnellrotierenden Fräs- oder Bohrköpfen, insbesondere solchen, die mit einer Umfangsgeschwindigkeit von über 250 m/S arbeiten, eine Befestigung der Schneidplatten vorzusehen, die sicherstellt, daß die Schneidplatten auch während des Arbeitszyklus in der vorgegebenen Stellung verbleiben, sich beim Einspannen durch die aufgebrachten Spannkräfte bis zum rückwärtigen Anschlag in die Aufnahme hineinziehen, ferner nicht durch thermische Einflüsse beschädigt oder zerstört werden.

Gelöst wird diese Aufgabe bei einem gattungsgemäßen Werkzeug durch die kennzeichnenden Merkmale des Anspruchs 1 bzw. Anspruchs 2.

Beiden Lösungsmöglichkeiten ist gemeinsam, daß in die Deckflächen der Schneidplatten Spannmulden eingebracht werden, die eine spezifische geometrische Form eines Teils eines Rotationskörpers aufweisen. Die Erfindung macht sich das Phänomen der Selbsthemmung zu Nutze, um die Schneidplatte in der vorgeschriebenen Lage zu halten, zusätzlich wird durch eine bestimmte Winkelausgestaltung erreicht, daß die Schneidplatte beim Anziehen der Spannpratze zwangsläufig bis zum Anschlag gezogen wird und in dieser Lage auch bei hohen Umfangsgeschwindigkeiten verbleibt.

Die Unteransprüche beschreiben bevorzugte Ausgestaltungsformen der Erfindung.

Die Erfindung wird nachstehend anhand der Zeichnungen erläutert.

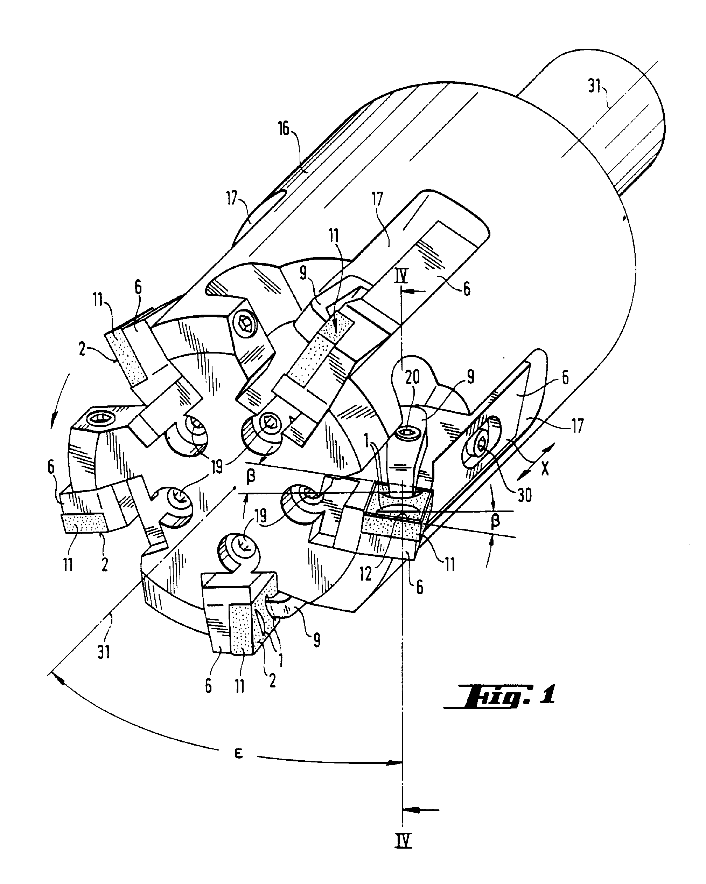

Fig. 1 zeigt in perspektivischer Darstellung einen Fräskopf,

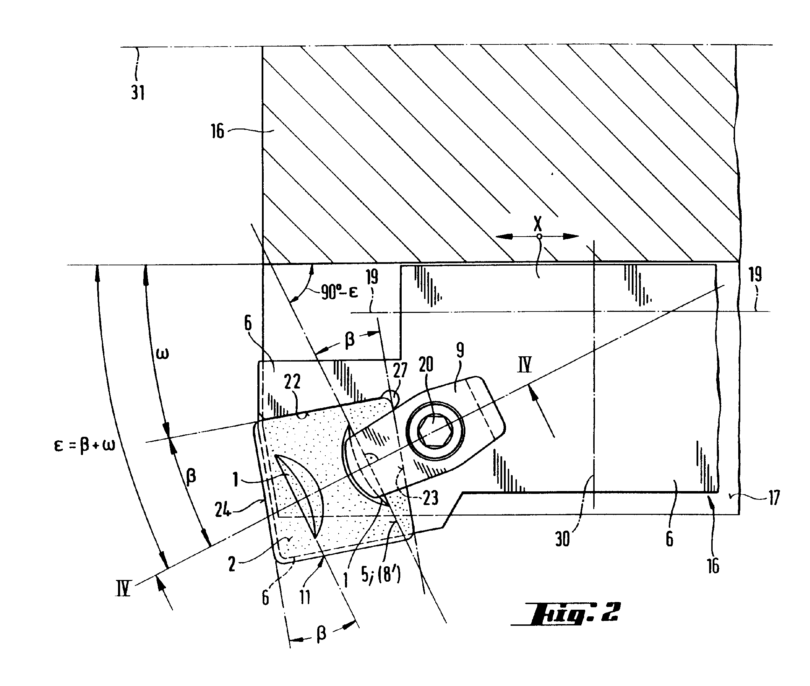

Fig. 2 als Draufsicht im Ausschnitt ein Spannelement dieses Fräskopfes,

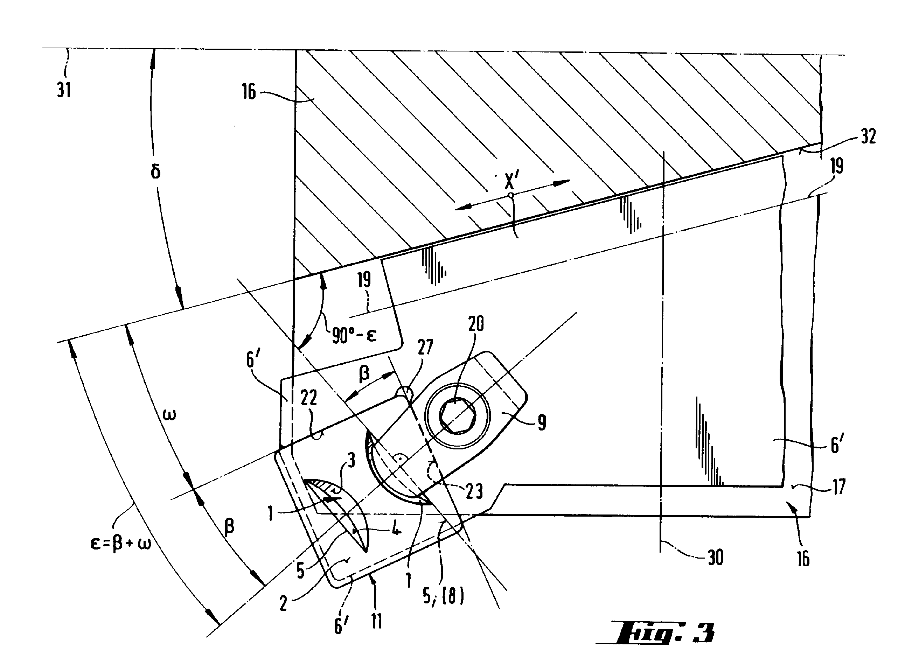

Fig. 3 die Draufsicht auf ein unter einem Winkel $\delta$ angeordnetes Spannelement,

Fig. 4 in vergrößerter Darstellung die Seitenansicht
einer Schneidplatte im Halter,

Fig. 5 die Draufsicht auf den Halter gemäß Fig. 4,

Fig. 6 die Seitenansicht der Schneidplatte gemäß Fig 5 im Schnitt mit angedeutetem Rotationskörper,

Fig. 7 die Draufsicht auf die Schneidplatte gemäß Fig. 6,

Fig. 8 die Seitenansicht einer Schneidplatte im Schnitt mit dargestelltem Rotationskörper,

Fig. 9 die Draufsicht auf die Schneidplatte gemäß Fig. 8,

Fig. 10 die Seitenansicht eines Halters nebest Spannpratze für Schneidplatten gemäß Fig. 9,

Fig. 11 eine weitere Schneidplattenform mit entsprechend dargestelltem Rotationskörper in der Seitenansicht im Schnitt und

Fig. 12 eine Draufsicht auf eine Schneidplatte gemäß Fig. 11.

Der Fräskopf besteht aus einem Trägerkörper (16), der Nuten (17) aufweist, in denen über Halteschrauben (30) die Halter (6), die die Schneidplatte (11) aufnehmen, gelagert sind. Die Halter (6) können über Justierschrauben (19) positioniert werden. Über eine Spannschraube (20) ist die Spannpratze (9) am Halter (6) befestigt, sie greift mit ihrer Nase (21) in eine Spannmulde (1) der Schneidplatte (11) ein und zieht beim Anziehen der Spannschraube (20) die Schneidplatte (11) an die rechte Anlage (22) und die linke Anlage (23). Die Schneidplatte (11) ist dadurch im wesentlichen ausgerichtet.

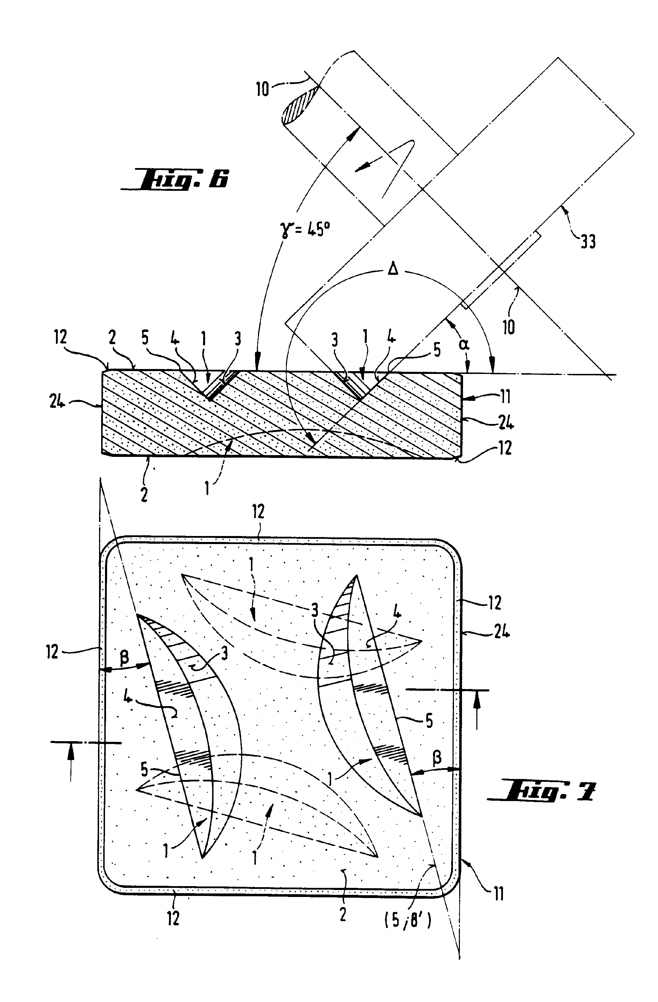

Die Spannmulden (1) sind, wie die Figuren zeigen, in den Deckflächen (2) der Schneidplatte (11) angeordnet und weisen die Form eines Abschnitts einer Mantelfläche (7, 7', 7", 7''') eines Rotationskörpers auf. Gemäß Figur 6 ist der um die Rotationsachse (10) sich drehende Rotationskörper dabei ein Zylinder (33), durch den eine gewölbte Fläche (3) und eine ebene Fläche in Form eines Kreisabschnittes (4) gebildet wird. Die Sekante (5) des Kreisabschnittes (4) verläuft dabei unter einem Winkel ($\beta$) zur benachbarten Umfangsfläche (24), der zwischen 13 und 32 Grad liegt, und unter einem Winkel (90 Grad - $\varepsilon$), wobei ($\varepsilon$) der Winkel zwischen Bewegungsrichtung (X) und der ihr benachbarten Umfangsfläche (24) ist. In Figur 23, ist ein Winkel von 16 Grad dargestellt.

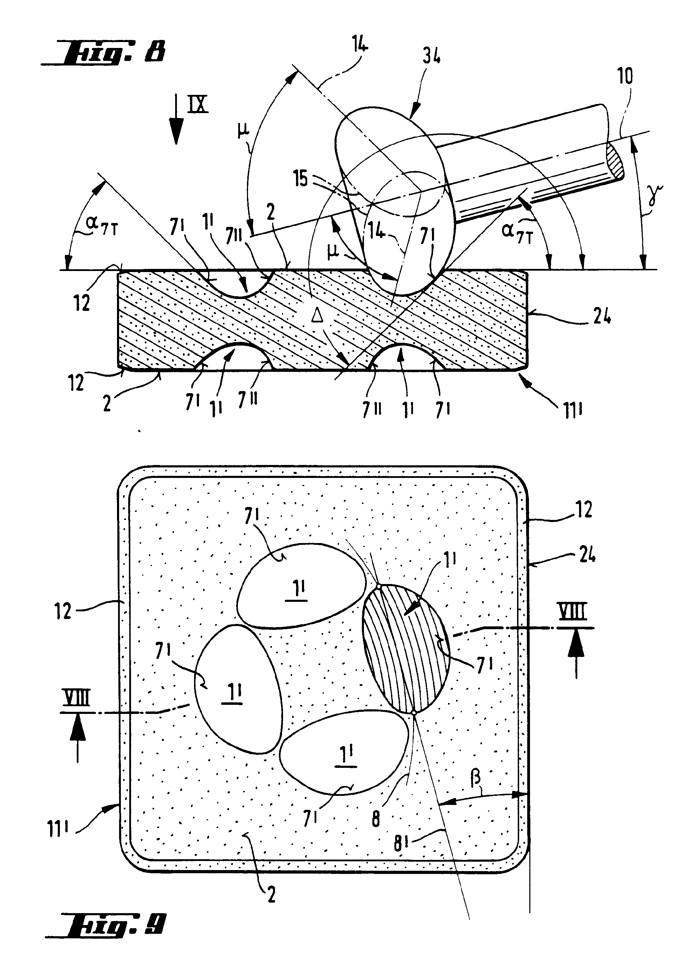

Der Kreisabschnitt (4) der Spannmulde (1) ist gegenüber der Deckfläche (2) um einen Winkel $\alpha$ von 15 bis 45 Grad geneigt. Damit liegt die Größe des Winkels $\Delta$, den die neiden Flächen, also die Deckfläche (2) und der Kreisabschnitt (4) miteinander bilden, zwischen 135 und 165 Grad. In der Figur 8 ist dieser Winkel $\Delta$ als Winkel von 150 Grad dargestellt.

Im Falle der Ausführung gemäß Figur 8 ist die Mantelfläche (7') der Spannmulde (1) Teil eines Ellipsoiden (34), der durch Rotation der Ellipse (15) um eine Rotationsachse (10) entsteht, die unter einem Winkel $\gamma$ zur Deckfläche (2) der Schneidplatte (11) geneigt ist. Die Ellipsenachse (14) ist dabei um den Winkel ($\mu$) gegenüber der Rotationsachse (10) geneigt, wodurch sich der Winkel ($\alpha$ 7T) an der Spannmulde (1') ergibt. Die Längsachse (8') der entsprechenden Spannmulde (1') weist daher die Form eines flachen Bogenstückes auf, wobei eine Verbindungslinie durch den Schnittpunkt des Bogens mit der Deckfläche (2) der Schneidplatte (11) unter dem gleichen Winkel $\beta$ verläuft wie die in Figur 6 und 7 beschriebene Sekante (5) des Kreisabschnittes (4). Zur Vereinfachung ist in der Anmeldung jedoch davon ausgegangen worden, daß dieser Bogen, also die Längsachse (8) der Spannmulde (1), eine Gerade ist, die unter dem Winkel $\beta$ verläuft.

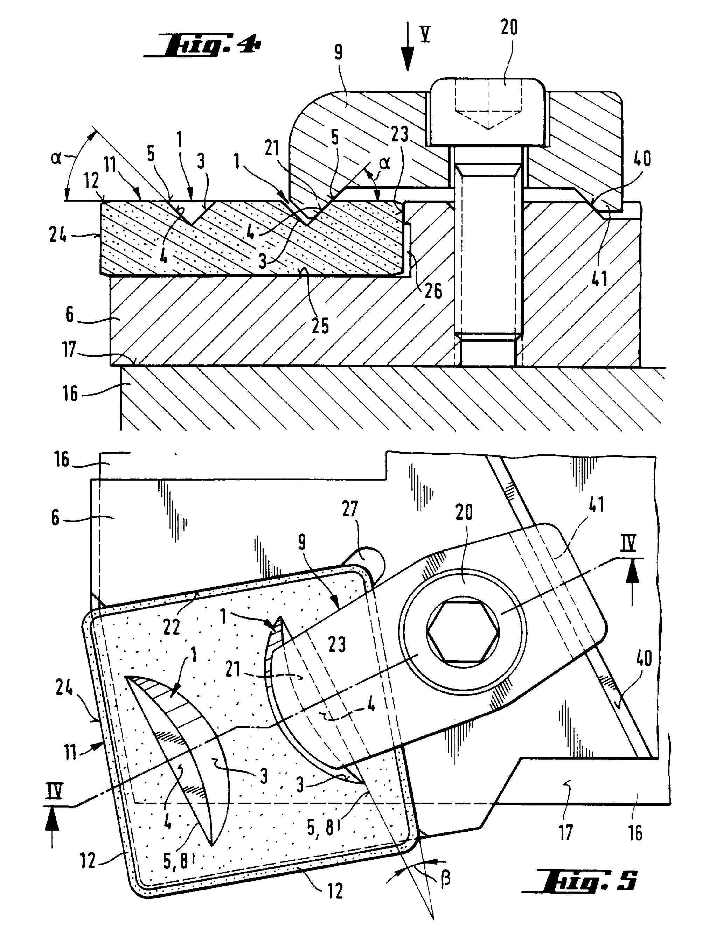

Die Schneidplatte (11) ist, wie die Figuren 4 bis 12 zeigen, mit einer umlaufenden Fase (12) versehen, die den Übergang von den Deckflächen (2) zu den Umfangsflächen (24) bildet. Zwei dieser Umfangsflächen (24) liegen an den Anlagen (22) bzw. (23) an, wobei das Anliesen nur im oberen Drittel erfolgt und sich in Richtung der Auflage (25) ein Freiraum (26) befindet, durch den gewährleisted wird, daß die Schneidplatte (11) ohne zu Schnäbeln auf der Auflage (25), die die Grundfläche der Ausnehmung (27) im verstellbaren Halter (6) bildet, aufliegt.

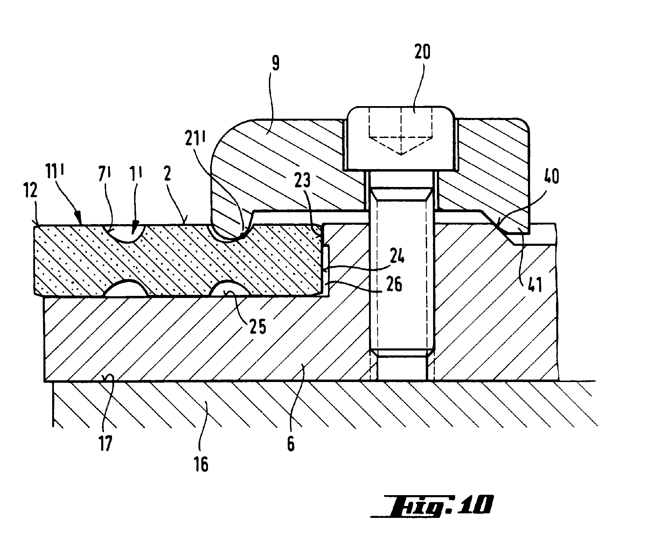

Die Figur 10, die eine Schneidplatte gemäß den Figuren 8 bzw. 9 zeigt, stellt dar, daß zwischen der Nase (21') der Spannpratze (9) und der Mantelfläche (7') des Rotationskörpers, der die Spannmulde (1') bildet, eine punktförmige Berührung besteht. Durch Anziehen der Spannschraube (20) wird die Spannpratze (9) nach unten bewegt, wodurch sie mit ihrem rückwärtigen Ende (41) auf die Abschrägung (40) am Halter (6) gedrückt wird, wodurch sie nach hinten verschoben wird und dadurch die Schneidplatte (11) mit der Umfangsfläche (24) an die Anlage (23) zieht.

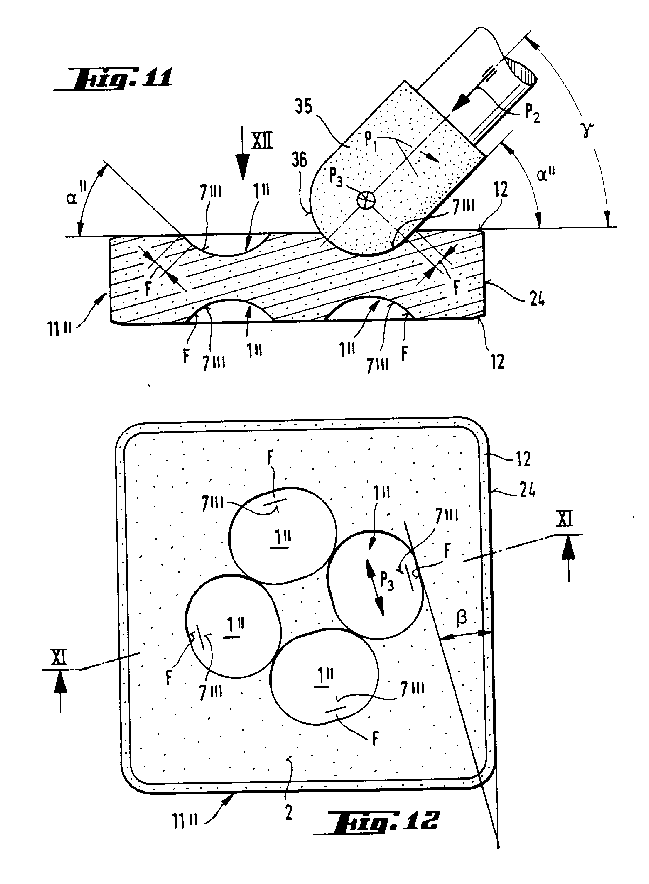

Eine weitere Version der Spannmuldenausgestaltung ist in den Figuren 11 und 12 dargestellt, wo der Rotationskörper, dessen Mantelfläche (7‴) die Spannmulde (1″) bildet, aus einem Zylinder (35) mit aufgesetztem Halbkugelkopf (36) besteht, dessen Mittelpunkt ($P_3$) in einer Ebene parallel zur Deckfläche (2) der Schneidplatte (11) bewegt wird. Ein Teil des Zylinders (F) tritt dabei noch unter die Deckfläche (2) der Schneidplatte (11″) ein, so daß in diesem Bereich der Spannmulde (1″) eine unter dem Winkel ($\alpha$″) verlaufende Schräge gebildet wird.

## Patentansprüche

1. Mit Schneidplatten (11) bestückter Fräs- oder Bohrkopf, bei dem die Schneidplatten (11) in zwei parallelen Deckflächen (2) mindestens je eine Spannmulde (1) aufweisen, die von einer ebenen unter einem Winkel $\alpha$ zur Deckfläche (2) verlaufenden Fläche an der ein Spannglied angreift und einer gewölbten, mit der ebenen Fläche einen Kreisabschnitt (4) bildenden Fläche (3) begrenzt ist, gekenzeichnet durch die Kombination folgender Merkmale:

die Schneidplatten (11) bestehen aus Sinterkeramik, das Spannglied ist als Spannpratze ausgebildet, der Kreisabschnitt (4) der Spannmulde (1) ist unter einem Winkel $\alpha$ von 15 bis 45 Grad zur Deckfläche (2) geneigt, die Spannmulde (1) weist eine Tiefe T von 1,2 bis 3,8 mm auf die Schneidplatte (11) ist so in einem im Fräs-oder Bohrkopf verstellbar angeordneten Halter (6) eingespannt, daß die Kante (5) des Kreisabschnittes (4) unter einem Winkel $\beta$ zur benachbarten Umfangsfläche (24) der Schneiplatte und unter einem Winkel 90 Grad minus $\varepsilon$ zur Justierrichtung (X) des verstellbaren Halters (6) verläuft.

2. Mit Schneidplatten (11) bestückter Fräs- oder Bohrkopf, bei dem die Schneidplatten (11) in zwei parallelen Deckflächen (2) mindestens je eine Spannmulde (1) aufweisen, die die Hohlform eines Abschnittes eines Umdrehungskörpers besitzt, wobei in die Spannmulde ein Spannglied eingreift gekennzeichnet durch die Kombination folgender Merkmale:

die Schneidplatte (11) besteht aus Sinterkeramik, und das Spannglied ist als Spannpratze ausgebildet, die Spannmulde (1) weist eine Tiefe T von 1,2 bis 3,8 mm auf,

die Achse (10) des die Mantelfläche (7) der Spannmulde (1) bildenden Umdrehungskörpers ist unter einem Winkel $\gamma$ von 15 bis 45 Grad zur Deckfläche (2) geneigt,

die Schneidplatte (11) ist so in einen im Fräsoder Bohrkopf verstellbar gelagerten Halter (6) eingespannt, daß die Längsachse (8) der Spannmulde (1) unter einem Winkel $\beta$ von 13 bis 32 Grad zur benachbarten Umfangsfläche (24) und unter einem Winkel 90 Grad minus $\varepsilon$ zur Justierrichtung (X) des verstellbaren Halters (6) verläuft.

3. Fräs- oder Bohrkopf nach Anspruch 2, dadurch gekennzeichnet, daß der Umdrehungskörper ein Ellipsoid (34) ist.

4. Fräs- oder Bohrkopf nach Anspruch 2, dadurch gekennzeichnet, daß der Umdrehungskörper (30) ein Zylinder mit halbkugelförmigem Endteil ist.

5. Fräs- oder Bohrkopf nach Anspruch 3, dadurch gekennzeichnet, daß die lance Achse (13) der Ellipse (15) des die Mantelfläche (7) der Spannmulde (1) bildenden Umdrehungskörpers unter einem Winkel $\gamma$ von 15 bis 45 Grad zur Deckfläche (2) geneigt ist.

6. Fräs- oder Bohrkopf nach Anspruch 1, dadurch gekennzeichnet, daß der Kreisabschnitt (4) einen Radius $R_k$ aufweist, der das 0,2- bis 0,5-fache eines durch die Schneidkanten der Schneidplatte (11) begrenzten Innenkreises beträgt.

7. Fräs- oder Bohrkopf nach einem der Ansprüche 3 und 5, dadurch gekennzeichnet, daß der Radius R der Ellipse (15), die den Ellipsoiden (14) bildet, das 1,2- bis 2,5-fache und der Radius r der Ellipse (15) das 0,25- bis 0,5-fache eines durch die Schneidkanten der Schneidplatte (11) begrenzten Innenkreises beträgt.

8. Fräs- oder Bohrkopf nach Anspruch 4, dadurch gekennzeichnet, daß der Zylinderdurchmesser das 0,8- bis 1,5-fache eines durch die Schneidkanten der Schneidplatte (11) begrenzten Innenkreises beträgt.

## Revendications

1. Tête de fraisage ou de perçage équipée de plaquettes de coupe (1), lesquelles plaquettes de coupe (11) présentent, dans deux faces principales parallèles (2), à chaque fois au moins une dépression pour serrage (1), laquelle est délimitée par une surface plane qui s'étend sous un angle $\alpha$ par rapport à la face principale

4

(2) et qui est attaquée au moyen d'un organe de serrage, et par une surface (3) formant avec la surface plane un segment de cercle (4), caractérisée par la combinaison des caractéristiques suivantes :

les plaquettes de coupe (11) sont en céramique frittée, l'organe de serrage est réalisé en tant que griffe de serrage, le segment de cercle (4) de la dépression pour serrage (1) est incliné d'un angle α de 15 à 45 degrés par rapport à la face principale (2), la dépression pour serrage (1) présente une profondeur T de 1,2 à 3,8 mm, la plaquette de coupe (11) est fixée dans un support (6) agencé avec possibilité de réglage dans la tête de fraisage ou de perçage, de manière telle que l'arête (5) du segment de cercle (4) s'étende sous un angle β par rapport à la surface périphérique voisine (24) de la plaquette de coupe et sous un angle de 90 degrés moins ε par rapport à la direction de réglage X du support réglable (6).

2. Tête de fraisage ou de perçage équipée de plaquettes de coupe (11), lesquelles plaquettes de coupe (11) présentent, dans deux faces principales parallèles (2), à chaque fois au moins une dépression pour serrage (1) qui possède en creux la forme d'une portion d'un corps de révolution (30), un organe de serrage s'engageant dans ladite dépression pour serrage, caractérisée par la combinaison des caractéristiques suivantes :

la plaquette de coupe (11) est en céramique frittée et l'organe de serrage est réalisé en tant que griffe de serrage, la dépression pour serrage (1) présente une profondeur T de 1,2 à 3,8 mm,

l'axe (13) du corps de révolution formant la surface-enveloppe (7) de la dépression pour serrage (1) est incliné d'un angle γ de 15 à 45 degrés par rapport à la face principale (2),

la plaquette de coupe (11) est fixée dans un support (6) monté avec possibilité de réglage dans la tête de fraisage ou de perçage, de manière telle que l'axe longitudinal (8) de la dépression pour serrage (1) s'étende sous un angle β de 13 à 32 degrés par rapport à la surface périphérique voisine (24) et sous un angle de 90 degrés moins ε par rapport à la direction de réglage (X) du support réglable (6).

3. Tête de fraisage ou de perçage selon revendication 2, caractérisée par le fait que le corps de révolution (30) est un ellipsoïde (14).

4. Tête de fraisage ou de perçage selon revendication 2, caractérisée par le fait que le corps de révolution (30) est un cylindre avec partie terminale hémisphérique.

5. Tête de fraisage ou de perçage selon revendication 3, caractérisée par le fait que l'axe longitudinal (13) de l'ellipse (15) du corps de révolution formant la surface-enveloppe (7) de la dépression pour serrage (1) est incliné d'un angle γ de 15 à 45 degrés par rappport à la face principale (2).

6. Tête de fraisage ou de perçage selon revendication 1, caractérisée par le fait que le segment de cercle (4) présente un rayon $R_k$ qui vaut de 0,2 à 0,5 fois un cercle intérieur (29) délimité par les arêtes de coupe (28) de la plaquette de coupe (11).

7. Tête de fraisage ou de perçage selon l'une des revendications 3 et 5, caractérisée par le fait que le rayon R de l'ellipse (15) qui forme l'ellipsoïde (14) et le rayon r de l'ellipse (15) valent respectivement de 1,2 à 2,5 fois et de 0,25 à 0,5 fois un cercle intérieur (29) délimité par les arêtes de coupe (28) de la plaquette de coupe (11).

8. Tête de fraisage ou de perçage selon revendication 4, caractérisée par le fait que le diamètre du cylindre vaut de 0,8 à 1,5 fois un cercle intérieur (29) délimité par les arêtes de coupe (28) de la plaquette de coupe (11).

## Claims

1. A milling head or drilling head provided with cutting plates (11), in which the cutting plates (11) in two parallel covering surfaces (2) have at least one clamping trough (1) each, which trough is defined by a flat surface, which extends at an angle α to the covering surface (2) and is engaged by a clamping member, and by a curved surface (3) forming with the flat surface a segment of a circle (4), characterized by the combination of the following features:

the cutting plates (11) consist of sintered ceramics,

the clamping member is constructed as a clamping claw,

the segment of a circle (4) of the clamping trough (1) is inclined at an angle α of 15 to 45 degrees to the covering surface (2),

the clamping trough (1) has a depth T of 1.2 to 3.8 mm,

the cutting plate (11) is so gripped in a support (6) arranged in the milling or drilling head that the edge (5) of the segment of a circle (4) extends at an angle β to the adjacent

circumferential surface (24) of the cutting plate and at an angle of 90 degrees less ε to the direction of adjustment (X) of the adjustable support (6).

2. A milling head or drilling head provided with cutting plates (11), in which the cutting plates (11) in two parallel covering surfaces (2) have at least one clamping trough (1) each, which have the hollow form of a portion of a body of revolution, wherein a clamping member engages the clamping trough, characterized by the combination of the following features:

the cutting plate (11) consists of sintered ceramics and the clamping member is constructed as a clamping claw,
the clamping trough has a depth T of 1.2 to 3.8 mm,
the axis (10) of the body of revolution forming the peripheral surface (7) of the clamping trough (1) is inclined at an angle $\gamma$ of 15 to 45 degrees to the covering surface (2),
the cutting plate (11) is so gripped in a support (6) adjustably mounted in the milling or drilling head that the longitudinal axis (8) of the clamping trough (1) extends at an angle $\beta$ of 13 to 32 degrees to the adjacent circumferential surface (24) and at an angle of 90 degrees minus $\varepsilon$ to the direction of adjustment (X) of the adjustable support (6).

3. A milling head or drilling head according to claim 2, characterized in that the body of revolution is a ellipsoid (34).

4. A milling head or drilling head according to claim 2, characterized in that the body of revolution is a cylinder (35) with a himispherical end part (36).

5. A milling head or drilling head according to claim 3, characterized in that the long axis (10) of the body of revolution of the ellipse (15) forming the peripheral surface (7) of the clamping trough (1) is inclined at an angle $\gamma$ of 15 to 45 degrees of the covering surface (2).

6. A milling head or drilling head according to claim 1, charcterized in that the segment of a circle has a radius $R_k$ which is 0.2 to 0.5 times an inscribed circle limited by the cutting edges of the cutting plate (11).

7. A milling head or drilling head according to one of claims 3 and 5, characterized in that the radius R of the ellipse (15), which forms the ellipsoid (14), is 1.2 to 2.5 times and the radius r of the ellipse (15) is 0.25 to 0.5 times an inscribed circle limited by the cutting edges of the cutting plate (11).

8. A milling head or drilling head according to claim 4, characterized in that the cylinder diameter is 0.8 to 1.5 times an inscribed circle limited by the cutting edges of the cutting plate (11).

*Fig. 1*

**Fig. 2**

Fig. 3

Fig. 4

Fig. 5

Fig. 6

Fig. 7

Fig. 8

Fig. 9

Fig. 10

EP 0 317 581 B1

Fig. 11

Fig. 12

14